# FASCICULE DE BREVET EUROPEEN

(11) **EP 2 079 991 B1**
(45) Date de publication et mention de la délivrance du brevet: **28.04.2010**
(21) Numéro de dépôt: 07858422.4
(22) Date de dépôt: 10.10.2007
(51) Int. Cl.: G01F 15/14, G01F 15/18, G01D 5/12

(54) **DISPOSITIF D'ADAPTATION D'UN MODULE ÉLECTRONIQUE SUR UN COMPTEUR D'EAU**
VORRICHTUNG ZUR ANBRINGUNG EINES ELEKTRONISCHEN MODULS AUF EINEM WASSERZÄHLER
DEVICE FOR FITTING AN ELECTRONIC MODULE ONTO A WATER METER

(30) Priorité: 18.10.2006 FR 0609159
(43) Date de publication de la demande: 22.07.2009
(73) Titulaire: Sappel, 68300 Saint Louis (FR)
(72) Inventeur: BIECHLIN, Christophe, 68720 ILLFURTH (FR)
(74) Mandataire: Laget, Jean-Loup
(86) Numéro de dépôt international: PCT/FR2007/001657
(87) Numéro de publication internationale: WO 2008/049987

(56) Documents cités:
- EP-A- 1 571 428
- CA-A1- 2 252 015

## Description

La présente invention a pour objet un dispositif d'adaptation d'un module électronique sur un compteur de liquide.

Les compteurs de liquide, par exemple les compteurs d'eau, sont de plus en plus équipables de modules électroniques. Ces modules électroniques permettent par exempte de réaliser un relevé d'index à distance.

Les compteurs de liquide à cadran de lecture sont généralement équipés d'une pièce mobile, par exemple une aiguille, associée à un aimant mobile compte-tours, ou à un disque métallisé, dont chaque tour de révolution correspond par exemple à un litre de débit.

Pour effectuer des relevés à distance, une solution consiste à pratiquer dans les compteurs à aimants, ou disques, des puits ou fentes aptes à recevoir des sondes munies de capteurs permettant de mesurer la rotation de l'aimant, ou du disque.

Toutefois, les éléments ajoutés doivent être immobilisés par des moyens tels que des vis.

Une autre solution consiste à utiliser un dispositif d'adaptation qui comprend un module électronique et qui est apte à être fixé sur le corps d'un compteur, par exemple par encliquetage comme en EP 1 571 428 ou par l'utilisation d'une pièce de fixation. Le document CA-A1-2 252 015, par exemple, divulgue un dispositif d'adaptation d'un module électronique sur un compteur de liquide, comprenant un module électronique et une pièce de fixation annulaire qui comporte deux bras disposés face à face. Les dispositifs connus présentent généralement une tenue sur le compteur insuffisante ou risquent de se casser lors de la mise en place.

La présente invention a pour but de proposer un dispositif d'adaptation d'un module électronique sur un compteur de liquide qui évite au moins certains des inconvénients précités, qui permette une mise en place facile et sans risque de casse, et un bon maintien.

A cet effet, l'invention a pour objet un dispositif d'adaptation d'un module électronique sur un compteur de liquide, comprenant un module électronique et une pièce annulaire de fixation destinée à être fixée sur la bordure supérieure d'un cadran de lecture dudit compteur de liquide, **caractérisé en ce qu**'une portion du périmètre de ladite pièce annulaire, dite portion d'engagement, comporte deux bras disposés face à face et se chevauchant, lesdits deux bras étant reliés entre eux par une came, ladite came étant mobile en rotation par rapport à un premier desdits deux bras, une rotation de ladite came par rapport audit premier bras. étant apte à entraîner un déplacement longitudinal du deuxième desdits deux bras par rapport audit premier bras pour régler la longueur de ladite portion d'engagement.

Avantageusement, ladite came comporte une tête, de section sensiblement circulaire, et une tige, de section sensiblement circulaire, ladite tige s'étendant selon un axe parallèle à l'axe de ladite tête et décalé par rapport à l'axe de ladite tête, ladite tige étant disposée dans un premier orifice sensiblement circulaire dudit premier bras, le diamètre dudit premier orifice étant sensiblement égal au diamètre de ladite tige, ladite tête étant engagée avec jeu dans un deuxième orifice dudit deuxième bras.

Selon un mode de réalisation de l'invention, ledit module électronique est apte à récupérer des données de comptage provenant du compteur de liquide et à transmettre lesdites données récupérées à un dispositif de traitement des données disposé à distance dudit compteur de liquide.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés. Sur ces dessins :
- la figure 1 est une vue schématique simplifiée en perspective d'un compteur de liquide ;
- la figure 2 est une vue partielle éclatée d'un dispositif d'adaptation d'un module électronique sur un compteur de liquide selon un mode de réalisation de l'invention, une came du dispositif d'adaptation étant en position de desserrage ;
- la figure 3 est une vue similaire à la figure 2, la came étant en position de serrage ;
- la figure 4 est une vue partielle en perspective de dessous du dispositif d'adaptation de la figure 2 ;
- la figure 5 est une vue similaire à la figure 1, le dispositif d'adaptation étant mis en place sur le compteur de liquide ;
- la figure 6 est une vue schématique simplifiée de dessus d'une portion d'engagement d'une pièce annulaire de fixation du dispositif d'adaptation, la portion d'engagement étant en position de desserrage ; et
- la figure 7 est une vue similaire à la figure 6, la portion d'engagement étant en position de serrage.

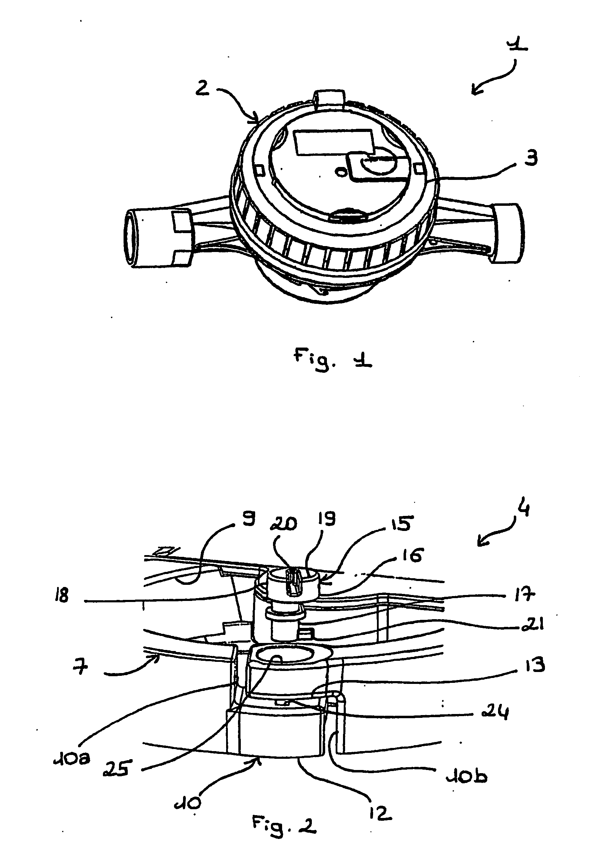

En se référant à la figure 1, on voit un compteur de liquide, par exemple un compteur d'eau 1. De manière classique, le compteur d'eau 1 comporte un corps 2, muni d'un cadran de lecture 3, et une pièce mobile, par exemple une aiguille (non représentée), associée à un aimant mobile compte-tours ou à un disque métallisé (non représenté).

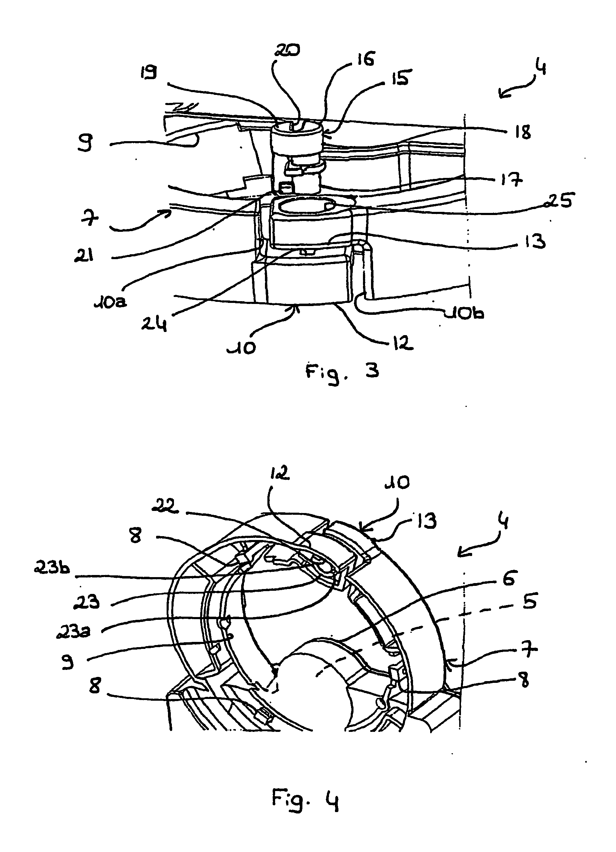

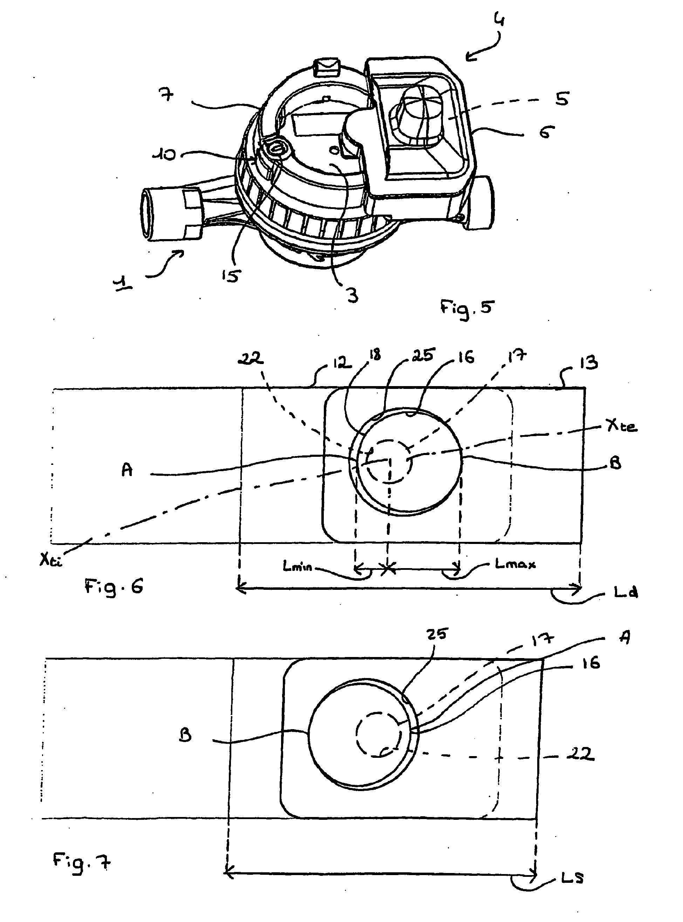

Les figures 2 à 5 montrent un dispositif d'adaptation 4 d'un module électronique 5 sur le compteur 1. Le module électronique 5 est par exemple intégré dans un boîtier 6 (figures 4 et 5) du dispositif 4. Le module électronique 5 a pour fonction de récupérer des données de comptage provenant du compteur 1. Par exemple, le module électronique 5 comprend un capteur sensible à la rotation de l'aimant, ou du disque, le capteur étant apte à délivrer un signal électrique à chaque tour de l'aimant, ou du disque. Les données récupérées, ici les données relatives à la rotation de l'aimant, ou du disque, sont transmises, par liaison filaire ou hertzienne, à un dispositif de traitement des données (non représenté) disposé à distance du compteur 1.

Ainsi, le dispositif de traitement des données peut être éloigné du compteur 1, ce qui est notamment intéressant lorsque le compteur 1 se trouve dans un environnement humide, ou qu'il est difficile d'accès.

Le dispositif 4 comprend une pièce annulaire de fixation 7, par exemple réalisée monobloc avec le boîtier 6 ou fixée à celui-ci, qui a pour fonction la fixation du dispositif 4 sur le compteur 1. La pièce annulaire 7 est réalisée dans un matériau flexible, par exemple du plastique.

La pièce annulaire 7 comporte trois clips 8 (figure 4), uniformément répartis sur la paroi intérieure 9 de la pièce annulaire 7. Chaque clip 8 est destiné à coopérer respectivement avec une encoche (non représentée) de la bordure supérieure du corps 2.

Une portion du périmètre de la pièce annulaire 7, dite portion d'engagement 10, présente une longueur réglable.

La portion d'engagement 10 comporte un premier bras 12 s'étendant depuis un premier bord 10a de la portion d'engagement 10 en direction du bord opposé 10b de la portion d'engagement 10. Le premier bras 12 est solidaire du bord 10a En position de repos de la pièce annulaire 7, le bord 10b est séparé de l'extrémité libre du bras 12 par un espace.

La portion d'engagement 10 comporte un deuxième bras 13 s'étendant depuis le bord 10b en direction du bord 10a. Le deuxième bras 13 est solidaire du bord 10b. En position de repos de la pièce annulaire 7, le bord 10a est séparé de l'extrémité libre du bras 13 par un espace. En d'autres termes, les bras 12 et 13 sont disposés de manière parallèle l'un à l'autre, face à face et se chevauchent.

Le dispositif 4 comprend une came 15. La came 15 comporte une tête 16, de section sensiblement circulaire, et une tige 17, de section sensiblement circulaire. Le diamètre de la tête 16 est supérieur au diamètre de la tige 17.

La face supérieure 19 de la tête 16 comporte une encoche 20 permettant l'insertion d'un outil adapté, par exemple un tournevis (non représenté), pour actionner la came 15. L'extrémité libre de la tige 17 comporte une excroissance 21 faisant saillie radialement.

La tige 17 traverse un orifice sensiblement circulaire 22 du premier bras 12.
Le diamètre de l'orifice 22 est sensiblement égal au diamètre de la tige 17. Le bord inférieur de l'orifice 22 comporte un rebord 23 (figure 4) sur lequel l'excroissance 21 est apte à se trouver en butée. L'insertion de la tige 17 dans l'orifice 22 est par exemple réalisée par le biais d'une encoche 24 (figure 3) permettant le passage de l'excroissance 21.

La tête 16 est engagée dans un orifice 25 du deuxième bras 13. Le diamètre de l'orifice 25 est supérieur au diamètre de la tête 16, de manière que le point B du bord 18 de la tête 16 soit en contact avec la paroi de l'orifice 25 et qu'il existe un espace entre le point A du bord 18, qui est diamétralement opposé au point B, et la paroi de l'orifice 25, comme cela est visible sur les figures 6 et 7.

On va maintenant décrire une opération de fixation du dispositif 4 sur le compteur d'eau 1 en partant d'un état de desserrage de la pièce annulaire 7, représenté sur les figures 2 et 6, qui correspond aux positions de desserrage de la came 15 et de la portion d'engagement 10. Dans cet état, l'excroissance 21 est en appui contre une extrémité 23a (figure 4) du rebord 23.

Dans l'état de desserrage, le diamètre de la pièce annulaire 7 est légèrement supérieur au diamètre du corps 2 du compteur 1, ce qui facilite la mise en place de la pièce 7 sur le compteur 1 et évite que la pièce 7 puisse être cassée pendant cette mise en place. L'installateur dispose la pièce 7 sur le compteur 1 de manière que les clips 8 se trouvent au droit des encoches. Dans cette position, la pièce 7 est engagée sur le compteur 1 mais n'est pas verrouillée sur le compteur 1, c'est-à-dire qu'elle peut être retirée facilement.

Pour réaliser le verrouillage de la pièce 7 sur le compteur 1, en partant de cet état, l'installateur introduit un outil adapté, par exemple un tournevis, dans l'encoche 20 de la tête 16. L'installateur fait tourner le tournevis dans l'encoche 20 dans le sens horaire. Cela a pour effet que la came 15 effectue une rotation dans le sens horaire. On notera que, en partant de l'état de desserrage, le rebord 23 empêche une rotation de la came 15 dans le sens trigonométrique mais permet une rotation dans le sens horaire. La tige 17 effectue une rotation par rapport au premier bras 12. Simultanément, la tête 16 effectue une rotation par rapport au premier bras 12. Cela a pour effet de déplacer le point B du bord 18 par rapport à la paroi de l'orifice 25. La force exercée par la tête 16 sur la paroi de l'orifice 25 a pour effet un déplacement du deuxième bras 13 par rapport au premier bras 12, par déformation élastique de la pièce annulaire 7. La force exercée comprend une composante transversale, qui a pour effet un décalage latéral du deuxième bras 13 par rapport au premier bras 12, et une composante longitudinale, qui a pour effet un déplacement du deuxième bras 13 en direction du premier bras 12.

Le déplacement du deuxième bras 13 en direction du premier bras 12 a pour effet que la longueur de la portion d'engagement 10 diminue, c'est-à-dire que le diamètre de la pièce annulaire 7 diminue. Simultanément, les clips 8 s'engagent dans les encoches.

Lorsque l'installateur fait tourner la came d'un angle de 180°, l'excroissance 21 se trouve en appui contre l'extrémité opposée 23b du rebord 23. La pièce 7 est dans un état de serrage, qui correspond aux position de serrage de la came 15 et de la portion d'engagement 10. Cet état est représenté sur les figures 3, 5 et 7.

On va maintenant décrire une opération de dégagement du dispositif 4 du compteur 1 en partant de l'état de serrage.

Dans l'état de serrage, la pièce annulaire 7 est fermement maintenue sur le corps 2 du compteur 1 par l'engagement des clips 8 dans les encoches, ce qui empêche un dégagement accidentel du dispositif 4.

Lorsque l'installateur introduit un outil adapté, par exemple un tournevis, dans l'encoche 20 de la tête 16 et fait tourner le tournevis dans l'encoche 20 dans le sens trigonométrique, cela a pour effet que la came 15 effectue une rotation dans le sens trigonométrique. La tige 17 effectue une rotation par rapport au premier bras 12. Simultanément, la tête 16 effectue une rotation par rapport au premier bras 12. Cela a pour effet de déplacer le point B du bord 18 par rapport à la paroi de l'orifice 25. La force exercée par la tête 16 sur la paroi de l'orifice 25 a pour effet un déplacement latéral du deuxième bras 13 par rapport au premier bras 12 et un déplacement longitudinal du deuxième bras 13 en direction opposée au premier bras 12.

Le déplacement longitudinal a pour effet que la longueur de la portion d'engagement 10 augmente, c'est-à-dire que le diamètre de la pièce annulaire 7 augmente. Simultanément, les clips 8 se dégagent des encoches.

Lorsque l'installateur fait tourner la came 15 d'un angle de 180°, l'excroissance 21 se trouve en appui contre l'extrémité 23a du rebord 23. La pièce annulaire 7 est dans l'état de desserrage. Dans cet état, le dispositif 4 peut être facilement dégagé du compteur 1, sans risque d'être cassé.

## Revendications

1. Dispositif d'adaptation (4) d'un module électronique (5) sur un compteur de liquide (1), comprenant un module électronique et une pièce annulaire de fixation (7) destinée à être fixée sur la bordure supérieure d'un cadran de lecture (3) dudit compteur de liquide,
**caractérisé en ce qu'**une portion du périmètre de ladite pièce annulaire, dite portion d'engagement (10), comporte deux bras (12, 13) disposés face à face et se chevauchant, lesdits deux bras (12, 13) étant reliés entre eux par une came (15), ladite came étant mobile en rotation par rapport à un premier desdits deux bras (12), une rotation de ladite came par rapport audit premier bras (12) étant apte à entraîner un déplacement longitudinal du deuxième desdits deux bras (13) par rapport audit premier bras pour régler la longueur de ladite portion d'engagement.

2. Dispositif selon la revendication 1, **caractérisé en ce que** ladite came (15) comporte une tête (16), de section sensiblement circulaire, et une tige (17), de section sensiblement circulaire, ladite tige s'étendant selon un axe parallèle à l'axe de ladite tête et décalé par rapport à l'axe de ladite tête, ladite tige étant disposée dans un premier orifice (22) sensiblement circulaire dudit premier bras (12), le diamètre dudit premier orifice étant sensiblement égal au diamètre de ladite tige, ladite tête étant engagée avec jeu dans un deuxième orifice (25) dudit deuxième bras (13).

3. Dispositif selon la revendication 1 ou 2, **caractérisé en ce que** ledit module électronique (5) est apte à récupérer des données de comptage provenant du compteur de liquide (1) et à transmettre lesdites données récupérées à un dispositif de traitement des données disposé à distance dudit compteur de liquide

## Claims

1. A device (4) for fitting an electronic module (5) onto a liquid meter 1, comprising an electronic module and an annular fastening part (7) designed to be fastened to the upper border of a read frame (3) of said liquid meter,
**characterized in that** a portion of the perimeter of said annular part, called the engagement portion (10), has two arms (12, 13) arranged face to face and overlapping each other, said two arms (12, 13) being connected together via a cam (15), said cam being able to rotate relative to a first of said two arms (12), a rotation of said cam relative to said first arm (12) being capable of causing a longitudinal displacement of the second of said two arms (13) relative to said first arm in order to adjust the length of said engagement portion.

2. The device according to claim 1, **characterized in that** said cam (15) includes a head (16), of essentially circular section, and a shaft (17), of essentially circular section, said shaft extending along an axis parallel to the axis of said head and offset in relation to the axis of said head, said shaft being arranged in a first essentially circular orifice (22) of said first arm (12), the diameter of said first orifice being essentially equal to the diameter of said shaft, said head being engaged with play in a second orifice (25) of said second arm (13).

3. The device according to claim 1 or 2, **characterized in that** said electronic module (5) is capable of recovering metering data coming from the liquid meter (1) and transmitting said recovered data to a data processing device arranged remote from said liquid meter.

## Patentansprüche

1. Vorrichtung zum Anpassen (4) eines elektronischen Moduls (5) an einem Flüssigkeitszähler (1), umfassend ein elektronisches Modul und ein ringförmiges Befestigungsstück (7), das dazu gedacht ist, auf der oberen Einfassung einer Skalenscheibe (3) des Flüssigkeitszählers befestigt zu werden,
**dadurch gekennzeichnet, dass** ein Teil des Umfangs des ringförmigen Stücks, der so genannte Eingriffsteil (10), zwei Arme (12, 13) umfasst, die sich gegenüberliegend angeordnet sind und sich überlagern, wobei die beiden Arme (12, 13) untereinander durch einen Nocken (15) verbunden sind, wobei der Nocken im Verhältnis zu einem ersten der beiden Arme (12) drehbar ist, wobei eine Drehung des Nockens im Verhältnis zu dem ersten Arm (12) dazu geeignet ist, eine Längsverschiebung des zweiten der beiden Arme (13) im Verhältnis zu dem ersten Arm herbeizuführen, um die Länge des Eingriffsteils einzustellen.

2. Vorrichtung nach Anspruch 1, **dadurch gekennzeichnet, dass** der Nocken (15) einen Kopf (16) mit im Wesentlichen kreisförmigem Querschnitt und einen Stab (17) mit im Wesentlichen kreisförmigem Querschnitt umfasst, wobei sich der Stab an einer Achse parallel zur Achse des Kopfes und im Verhältnis zur Achse des Kopfes versetzt erstreckt, wobei der Stab in einer ersten im Wesentlichen kreisförmigen Öffnung (22) des ersten Arms (12) angeordnet ist, wobei der Durchmesser der ersten Öffnung im Wesentlichen gleich dem Durchmesser des Stabs ist, wobei der Kopf mit Spiel in einer zweiten Öffnung (25) des zweiten Arms (13) in Eingriff gebracht wird.

3. Vorrichtung nach Anspruch 1 oder 2, **dadurch gekennzeichnet, dass** das elektronische Modul (5) dazu geeignet ist, Zähldaten wiederzugewinnen, die von dem Flüssigkeitszähler (1) stammen und die wiedergewonnenen Daten an eine Datenverarbeitungsvorrichtung zu übertragen, die von dem Flüssigkeitszähler entfernt angerordnet ist.
